# EUROPEAN PATENT SPECIFICATION

(11) **EP 1 145 555 B1**
(45) Date of publication and mention of the grant of the patent: **25.02.2004**
(21) Application number: 99962448.9
(22) Date of filing: 23.12.1999
(51) Int. Cl.: H04N 7/173

(54) **ELECTRONIC PROGRAMME SCHEDULING SYSTEM**
ELEKTRONISCHES-PROGRAMMABLAUF-SYSTEM
SYSTEME ELECTRONIQUE DE PLANIFICATION DE PROGRAMMES

(30) Priority: 23.12.1998 GB 9828591
(43) Date of publication of application: 17.10.2001
(60) Divisional application: 03027757.8
(73) Proprietor: NTL Group Limited, Hook, Hampshire RG27 9UP (GB)
(72) Inventor: LANG, Jack, Arnold, Hook, Hampshire RG27 9UP (GB); STRICK, Michael, Hook, Hampshire RG27 9UP (GB)
(74) Representative: Martin, Philip John
(86) International application number: PCT/GB1999/004412
(87) International publication number: WO 2000/040028

(56) References cited:
- EP-A- 0 721 253
- EP-A- 0 852 443
- WO-A-91/00670
- US-A- 5 418 782
- US-A- 5 550 578
- PATENT ABSTRACTS OF JAPAN vol. 1997, no. 11, 28 November 1997 (1997-11-28) & JP 09 200580 A (SONY CORP), 31 July 1997 (1997-07-31)

## Description

The present invention generally relates to systems for the management of programmes for home entertainment devices such as televisions. More particularly it is concerned with apparatus, methods and software for scheduling such programmes.

Until recently conventional televisions have been able to receive only a relatively limited number of channels of programmes. Typically terrestrial television broadcasting has provided 4 or 5 channels, satellite broadcasting of the order of a dozen channels and cable television broadcasting a few tens of channels. With the advent of new forms of programme delivery such as digital terrestrial television (DTT), digital satellite television, web casting - delivery of programmes over the Internet - video on demand (VOD) and/or near video-on-demand (NVOD) the number of available television channels is predicted to grow dramatically. Consumers will be able to choose from many thousands of programmes or programme clips, which could include daily video magazines, regularly updated news from hundreds of sources around the globe, music tracks and videos, games and films. Newer PC-TVs and set-top-boxes (STBs) have the ability to store programmes on an internal hard disk for viewing later and to access web-cast video over the Internet, as well as having the capability to receive many hundreds of channels of broadcast material and NVOD movies. Thus consumers will be faced with an overwhelming choice of viewing.

Television viewers exhibit both "push" and "pull" behaviour. In push behaviour a passive viewer selects a channel, typically by editorial style much as one might choose a newspaper, and is essentially passive thereafter. Pull behaviour is where a viewer deliberately chooses or "pulls" a desired programme, for example a video, soap, sporting fixture or well-advertised/trailed programme. Viewers may even pay for such material. However, in both cases the viewer is making a choice from a small number of alternatives. When the choice becomes too great the viewer easily becomes confused and will typically ignore much of the material on offer by restricting viewing to a few familiar channels.

An electronic programme guide (EPG) is, generally speaking, an application resident on a set top box designed to aid the viewer in the navigation of and selection from broadcast material available in a digital TV environment. Conventional electronic programme guides (EPGs) are of little assistance when the number of channels or viewable entries becomes large. The choices available to a viewer become too many to fit on a single page or on few enough screens to be understandable. Channel surfing is also difficult because of the difficulty in remembering what is being broadcast on the sampled channels. With 500 channels, it would take 83 minutes to glance at each channel, allowing 10 seconds per channel.

EP-A-0 838 915 describes a digital broadcasting system using virtual channels in which broadcast transport streams include channel mapping information, but the system lacks an EPG display. WO 96/17467 describes a system and method for scheduling broadcast of and access to video programmes and other data using customer profiles. The "virtual channels" described therein are generated either at a video head-end or in a set top multimedia terminal but there is no means to download a "virtual channel" schedule from for example, the head end to the customer's set top terminal. US 5,534,911 describes an apparatus for providing a customer of a television system with a virtual personal channel but presents menu options and choices rather than a channel schedule as such. WO 96/41477 describes an electronic television programme guide schedule system and method including virtual channels but the "virtual channels" of this publication are not schedules of programmes selected from a plurality of real channels but are instead a complete mapping of a full real channel schedule (as described at page 47). WO 95/19092 describes a consumer interface for a digital television system in which a controller selects a "virtual channel" which is subject to reassignment to one of a plurality of digital data transmission channels. Thus, a virtual channel may provide bandwidth for a sporting event or for two movie channels giving a user the perception that he has more channels than in fact can be supported simultaneously by the available bandwidth - this publication's concept of a "virtual channel" is that of time-multiplexing the system bandwidth. WO 94/29811 refers to a "virtual channel" which is a text channel transmitted in the vertical blanking intervals of cable television channels. US 5,841,433 again describes a system in which complete channels are mapped. Further background information can be found in WO 97/42763, US 5,781,246 and EP-A-0 671 861.

The various aspects of the present invention are aimed at alleviating these problems by providing a more intelligent "electronic programme guide" which incorporates a concept of a virtual channel to assist in choosing between sources of programming. The advent of intelligent television receivers and set-top boxes (STBs) with inbuilt storage and processing power allows intelligent switching of channels between and within TV programmes. These developments have the potential for a radical effect on the TV paradigm, and in particular negate the assumption that the passive viewer is captured by a particular broadcasting channel.

According to one aspect of the present invention there is provided a system, and a corresponding method, for providing an entertainment device with a virtual channel, the virtual channel comprising a schedule of programmes and corresponding start times, the programmes being selected from programmes available from a plurality of real channels and/or other programme sources, the system comprising: schedule input means to receive virtual channel schedule information; schedule information storage means; schedule display means for displaying a stored schedule; control means to control a programme reception device to receive programmes identified by the virtual channel schedule; and output means to provide scheduled programmes thus received to the entertainment device. The system is characterized in that the virtual channel schedule information comprises, for each scheduled programme, programme start time information and information identifying a real channel or programme source from which the programme is available at that start time; the schedule input means includes communication means to download the virtual channel schedule information to the system from a source remote from the system to the storage means; the control means controls the programme reception device using the virtual channel schedule information to select and receive, at the scheduled start time, the correspondingly scheduled programme from the real channel or programme source identified by the virtual channel schedule; and in that the virtual channel is selectable by a user of the entertainment device in a similar way to a real programme channel. This allows download of, for example, an "Editor's recommendations" or "Critic's choice" channel for example published electronically by a newspaper or magazine. Preferably the entertainment device is a television, and the virtual channel is provided by a set top box (STB).

The invention extends the "pull" metaphor by introducing a level of indirect reference in the form of the notion of a "virtual channel" made up of pre-selected programmes and other material. Such a selection may have been made by, for example, an editor, from the programmes scheduled on multiple real channels and other sources, and the suggested "virtual channel" viewing schedule published electronically, for example on a Web page.

A virtual channel is essentially a series of programmes from diverse sources intended to be shown in succession. More particularly, in one embodiment a virtual channel comprises of a schedule of material from any available broadcast channels, individually chosen by a user, TV critic, advertiser or other person. The set top box automatically re-tunes to each broadcast channel as required, providing the effect of a single channel.

The system allows a user to download and/or generate a virtual channel or channels comprising a sequence of programmes from multiple programme sources, chosen according to the user's taste or specifications. This helps to simplify the user's choices by changing emphasis from a broadcast model to a "virtual channel model". It thus allows the user to choose between a small number of more attractive options.

The system may be configured to schedule a plurality of virtual channels for the user. Thus a user could set up channels such as "My sport's channel", "My movie channel", "My gardening channel" and "My news channel", and "surf" between them as if they were broadcast channels. The apparatus is preferably controllable to restrict selectable virtual channels to those associated with a particular current user, thereby embodying a concept of personal channels. As the user is identified, channel choice can also be restricted by parental or other control, for example to screen out programmes with violent or adult content. Virtual channels can also thereby be suggested for a user. Preferably a portion of virtual channel schedule is definable for replacement by a schedule of a broadcast television channel. This allows the virtual channels to map to and include broadcast channels, by the use of suitable criteria, for example, "Programmes from BBC 1".

Advantageously programmes for scheduling include VOD and NVOD video and programmes available via the Internet, that is web-cast stations. Preferably the system further comprises programme reception and storage means so that the programmes for scheduling can include stored programmes. This develops the basic concept of time-shifting programmes and provides further flexibility within the virtual channel schedule. It also allows programmes which overlap in time to be scheduled. Advantageously the scheduling is operable automatically based upon collected user preference information.

The system may comprise means to suggest a virtual channel schedule in response to stored user characteristics. This allows the suggestion of virtual channels likely to be of interest to the user, further simplifying choice. The system may be still further operable to communicate with remote users of other similar system to allow at least a portion of a virtual channel schedule and/or parameters to be transmitted or received. This allows virtual channel descriptions to be read from and written to others, for example, via the Internet, so that they may be exchanged between friends:

These and other aspects of the invention will now be described, by way of example only, with reference to the accompanying drawings in which:
Figure 1 shows a block diagram of a system according to an embodiment of the present invention;
Figure 2 conceptually illustrates the concept of a virtual channel;
Figure 3 shows a simple example of an on-screen electronic programme guide for a virtual channel;
Figure 4 shows a relational database for storing programme data;
Figure 5 shows a simple example of a user interface for searching the database of Figure 4;
Figure 6 shows a block diagram of software modules for an electronic programme scheduling system;
Figure 7 shows, schematically, parts of an exemplary user interface; and
Figure 8 shows, schematically, parts of another exemplary user interface.

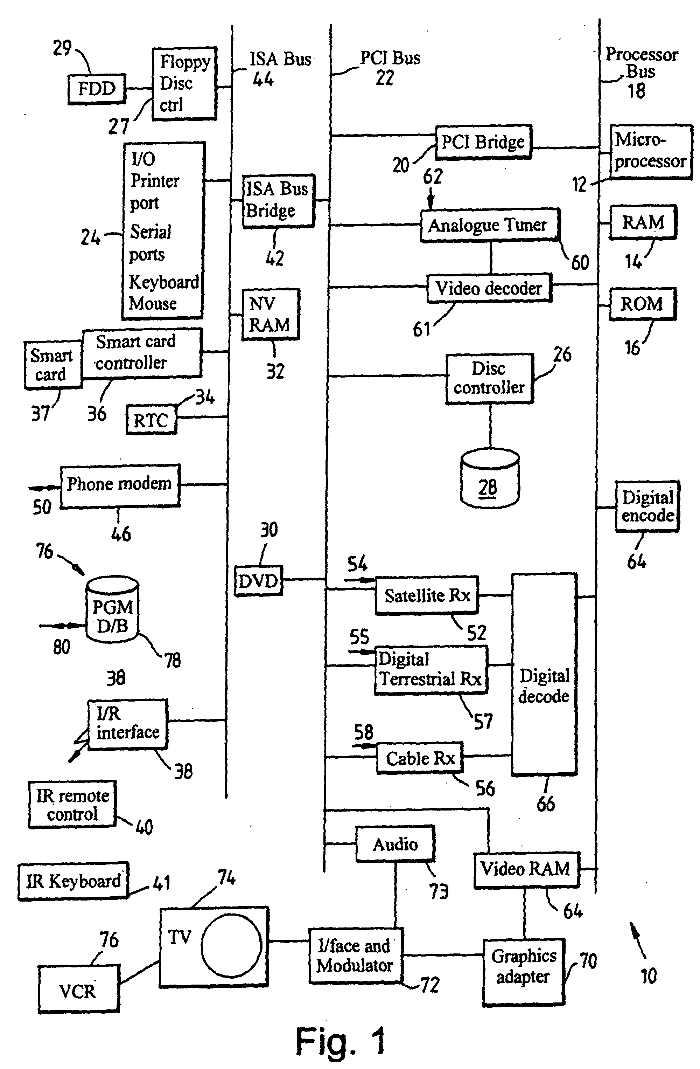

Figure 1 shows one example of a system which is suitable for providing a home entertainment device, such as a television, with a virtual channel. Logically the system is located between a programme source such as a terrestrial television programme transmitter and a television receiver; physically it may be incorporated within a television set. In outline the system is based upon hardware corresponding to a conventional personal computer system with the addition of components for television programme reception and processing and modifications to enable the computer to be embedded in a conventional set top box (STB) with infrared remote control. Much of the functionality is provided by firmware stored in read only memory (ROM), although the program could be stored on hard disk, where the STB is so equipped, and executed from random access memory (RAM). The configuration of the computer system can be varied to suit the level of desired functionality. The illustrated system is suitable for a processor which performs multimedia operations (such as a Pentium with MMX) but a simpler microcontroller could be used and the basic functionality required of the system could even be provided by dedicated hardware. The skilled person will recognise that many variations to the illustrative hardware can be made according to cost, component availability, system functionality and other considerations. Although the system will be described as providing programmes to a television, it is suitable for use with any home entertainment device such as a VCR or DVD recorder and, in general, any programme receiving device.

In Figure 1 the set top box is generally illustrated at 10 and comprises a microprocessor 12 coupled to random access memory (RAM) 14, ROM 16 and peripheral component interconnect (PCI) bridge 20 by processor bus 18. ROM 16 holds system BIOS (Basic Input Output System) and operating software, the BIOS interfacing between the operating software and the STB hardware. If desired, the BIOS ROM can instead be coupled to the processor via the low speed ISA bus 44. PCI bus 22 is driven by PCI bridge 20 and is suitable for high speed data transfer although it is slower than processor bus 18. Optionally, hard/floppy disk controller 26 and disk drive 28, and digital versatile disk (DVD) drive and controller 30 are coupled to the processor via the PCI bus 22. To the ISA bus is attached non-volatile RAM 32 for storing, for example, user input information; real time clock 34; smart card interface 36 for smartcard 37 and infrared control link device 38. Commands are issued to the set top box by the user using a hand held infrared remote control unit 40 or infrared keyboard 41 which communicates with control link device 38.

Industry standard architecture (ISA) bus 44 is coupled to PCI bus 22 by ISA bus bridge 42. The system is preferably provided with means to receive television programmes from a variety of sources such as broadcast programmes from satellite, cable and conventional terrestrial transmitters, video or near-video-on-demand (both referred to as NVOD) sources, and Web cast programmes from Internet-based sources. However, a simplified system may lack such receiving means and may instead control the television to display a desired programme, for example by transmitting infrared commands to the transmitter as though it were the television's remote control device; in this case IR module 38 may also be an IR transceiver.

In Figure 1, conventional tuner 60 has input 62 coupled to a terrestrial television aerial to receive terrestrially broadcast programmes; cable television receiver 56 has input 58 coupled to a cable TV network; satellite receiver 52 has input 54 coupled to a satellite receiving dish; and digital terrestrial receiver 57 has input 55 from a suitable terrestrial aerial. Telephony modem 46, which may be a cable modem, or an International Subscriber Digital Network (ISDN) or an asymmetric digital subscriber line (ADSL) modem (or any suitable digital subscriber line device) is coupled to telephone line 50 to receive VOD/NVOD programmes. Digital programme receiving devices have their digital information stream output coupled to decode unit 66 (audio paths are not shown in Figure 1), which is also coupled to ISA bus 44 or PCI bus 22.

Television programmes may have associated data streams and the programme receiving means are therefore preferably provided with means to receive data and/or to extract data from received video signals which can, for example, be included in the vertical blanking interval (VBI) of a television signal. Since the ADSL connection provides a data channel, this can also be used for data communications. Such connections allow the system to handle data casting and to extract programme data such as broadcast channel identification information, time and date information and subtitles.
The apparatus is preferably configured to view programme video information and simultaneously browse the Web and carry out Web related activities, for example downloading software or information.

An audio and motion video compression module 64 is also coupled to bus 18 and may also be implemented in software. Data may be input to this to allow broadcast programmes to be recorded locally and made available for later viewing. The video data is compressed according to a standard format such as MPEG, Real Media or H323 and then stored as a compressed file on disk. Module 66 also includes corresponding decoding means to decompress the compressed video and audio. Optionally, the video compression and decompression can be performed by processor 12. The system is preferably operable to concurrently store a received programme and to play a stored programme by, for example, interleaving write and read-erase access cycles to the storage module's disk drive.

A video output carrying programme information, is coupled to the television via graphics adapter/video signal combiner 70 and modulator 72. If the television has a direct video input, modulator 72 may be omitted and the television 74 may be connected directly to video output via a SVGA socket, a SCART socket, S-Video socket, RCA phono plugs or other well known interfaces. Video RAM 70 is connected to the processor bus 18 and allows the system to generate graphics and combine them with the digital signal from video decode 66, for example using overlay or picture-in-picture modes, and can also output a video signal without any additional graphics. The system is configured to directly overlay text and/or graphics onto programme video and to achieve a similar result by overlaying a sparse Web page. This information can, for example, be used to provide further information about the programme or channel currently being viewed, for example information on "What's on next".

The system also includes an event detector module implemented in software to detect events in a programme video stream such as programme breaks within and/or between programmes. Such breaks or interruptions can be caused by commercial advertising or the interruption of other programmes for example news programmes. For example, in the U.K. a pair of vertical bars appears in the top right hand comer of the picture frame as a video switching mark shortly before a commercial break and the event detector is configurable to provide the video decode responsive to programme break detection. For digital transmissions, appropriate digital descriptor information is used to detect programme change.

Events can be determined by absolute and/or relative times, for example "at 10 p.m." or "five seconds after the start of the BMW (Registered Trade Mark) advert". Events, and the systems response to them, can be defined by extensions to HTML information associated with the relevant programmes. For example, in accordance with the recommendations of the Advanced Television Enhancement Forum (ATVEF) recommendations on proposed HTML extensions. The events and responses can also be transmitted in-band, for example in the VBI as a subtitle (the US EIA 746 standard) or in a digital video stream as a subtitle or as a separate event object in the data carousel, or even can be separately input via some other online connection.

The system is preferably equipped with bi-directional communications, so that information can be both received from and transmitted to remote apparatus. Thus cable receiving means 56, phone modem 46 are preferably all operable to transmit data as well as to receive programme and data information. Thus conventional Web-browser software in firmware may be employed to allow a user to interact with Web pages via the Internet, for example using IR remote control 40 to select hypertext links on Web pages displayed to the user by graphics adapter 70. Programme descriptor information can be displayed with selectable/clickable extensions and, more generally, Web-based electronic programme guide (EPG) information can be displayed. Although the operating system software has been described as being stored in ROM, it may be stored in non-volatile memory such as FLASH memory (EEPROM) whereby the system can be updated by downloading new software over one or other of the communication links, either when it becomes available or when a user pays to upgrade the system.

Also shown in Figure 1 is a database 76 remote from the set top box and comprising database storage means 78 and bi-directional communications link 80 for communication with the set top box (STB). Although shown remote from the apparatus, the programme database may be incorporated within the apparatus either in memory or on the local hard disk and generated from broadcast programme information. The database is provided with a software interface based on a standard protocol such as ODBC (Open Database Connectivity), for connection to other elements of the system. Again, although the database is illustratively shown as a unitary structure it could also comprise information held in a large number of disparate sources, for example electronic programme guides at various different Web page URL's. A further alternative is that the database is held remotely, as illustrated, with a copy of the database held locally in the set top box, for example, on disk or in the NVRAM and periodically updated by file transfer, for example, by telephone dial-up on demand or at a fixed time daily or by data insertion in the broadcast signal, for example overnight in in-band data such as VBI inserted data for analogue TV or as part of the data carousel for digital TV. Communication with the database can be by any conventional means, for example by phone modem 46 and/or a copy or partial copy of the database can be downloaded to the STB using the satellite 52, digital 57 and/or cable 56 receiver(s). The information held in the programme database is described in more detail below.

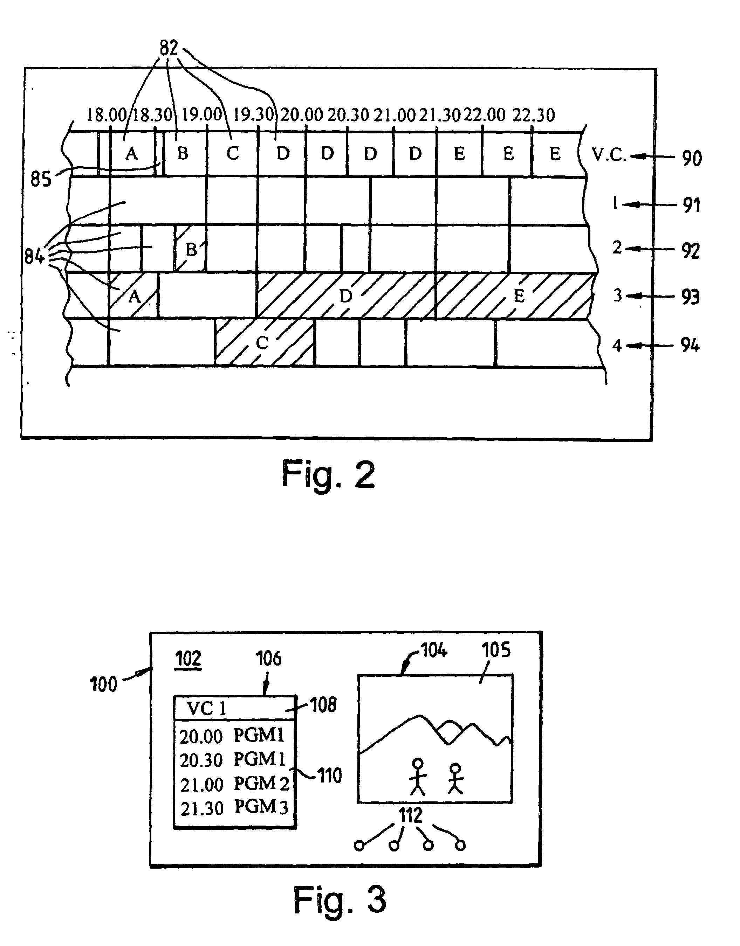

A virtual channel is a schedule of programmes which have been selected from programmes available from real channels or other programme sources (for example, Webcast programmes). The schedule is made up by selecting programmes from a variety of channels for showing in, preferably, defined time slots in the virtual channel. The concept of a virtual channel is illustrated diagrammatically in Figure 2. Figure 2 shows a virtual channel schedule 90 and schedules for four real channels, 91, 92, 93 and 94. The real "channels" may include cable, satellite, terrestrial and Web-cast television channels and NVOD programmes.

Illustratively the virtual channel 90 has a template structure with notional divisions at half hour intervals defining half hour time slots 82 for programme scheduling. Time slots of other lengths can also be defined and, more generally, a flexible structure can be adopted in which the time slots are of varying length, preferably with start and end times corresponding to start and end times of programmes on a real channel(s).

The real channels have programmes 84 of variable start time and duration scheduled as shown. In the illustrated example, the virtual channel schedule comprises five programmes, A, B, C, E and E during the interval 18:00 hours to 22:30 hours. Programme A is scheduled to occupy the slot from 18:00 hours 18:30 hours on the virtual channel; it is available on real channel 93 during the same interval and therefore a system for providing the virtual channel must select programme information from channel 93 for output during this time period.

The second time slot in the virtual channel begins at 18:30 hours and programme B, available on channel 92, is schedule for this time slot. Programme B ends at 19:00 hours, which corresponds with the end of the time slot on the virtual channel, but it starts after 18:30 hours, leaving a gap 85 in the virtual channel schedule. This gap may be filled either by programme material from channel 93 following programme A or by programme material from channel 92 preceding programme B, or by a supplementary programme material. Such supplementary material may comprise advertising from a standard source, material from a source defined by the virtual channel schedule information, or material from a source automatically chosen by the system according to available information (such as information describing the programmes in the virtual channel schedule or information describing or characterising a system user or user preferences). It may include material previously recorded on a local storage device. Since, by definition, VOD programmes are effectively available on-demand, gaps and overlaps in the virtual channel schedule can be adjusted by adjusting the start time of VOD programmes in the schedule.

Programme C from channel 94 is scheduled for the third illustrated half-hour time slot on the virtual channel, and programme D from channel 93 is scheduled for the following four time slots. It can be seen that programmes C and D overlap and, in the illustrated example, programme D has taken priority over programme C in the virtual channel schedule. Programme overlaps can be handled either by manually choosing which programme takes priority, or by pre-programmed rules. For example, the earlier or the later programme may always take precedence or rules can depend upon programme related information such as programme genre which allows rules such as "movies take priority over news" to be defined. In a preferred embodiment the system has a basic set of in-built rules which can be modified by the user.

As described above, when the set top box includes means to receive more than one programme at once and when it includes motion video storage means, overlapping programmes such as C and D may be scheduled at different times or to run consecutively. For example, programme C could be scheduled for both slots between 19:00 hours and 20:00 hours then, whilst, from 19:30 onwards C is being provided to the television, the initial half hour of D is recorded, and then after 20:00 hours the initial part of D is output to the television whilst the later part of D is concurrently recorded. This concurrent playback and recording is continued to move the end of programme D and the start of programme E to approximately 22:00 hours. The system is operable in a similar way to prevent a virtual channel schedule being disrupted by a programme which is broadcast at a later time (or an earlier time) than that at which it is initially described as being available. The actual broadcast time of a programme can be determined by video stream events and/or from data downloaded by the system and by concurrent recording and playback the whole schedule can be shifted back in time until a suitable gap or lower priority programme is encountered.

If desired, more than one consecutive programme from a real channel can be scheduled on the virtual channel, and in this case it is convenient to provide means whereby a user can map a portion of virtual channel 90 to a corresponding portion of a real channel. It is preferably also possible to fully map the virtual channel to a real channel so that, for example, virtual channel 90 may be defined as identical to real channel 93.

Although the scheduled entities have been referred to as programmes (multimedia, video, or audio), other similar entities such as computer games, computer based learning activities and interactive telecommunication events may also be scheduled.

The information defining the virtual channel schedule comprises, at its most basic, an ordered list of programme entities. Associated with each entity is information specifying a real channel or other programme source, including other virtual channels, from which the channel entity is available. Preferably the virtual channel schedule information comprises, for each scheduled programme, information identifying the start time of the programme as well as information identifying a real channel on which the programme is available at that start time. Programme duration information may also be included. In the case of NVOD programmes the "real channel" information comprises NVOD programme source information.

The operating software in the ROM 16 of the set top box uses information defining the virtual channel schedule to control the set box top to provide the set scheduled programmes to output 74 to the television at the correct times. At a programme start time processor 12 selects the appropriate programme input means and real channel and logically couples the video stream to output 67 or the video switch and thence to the output 74 of the set top box. The video output is provided to the television so that the output video stream can be selected in the same way that other real channels on television are selected. In one embodiment the modulator 72 provides a UHF radio frequency output to the television and when the television is tuned to this frequency the programmes scheduled on the virtual channel are provided so that to a user the virtual channel is selectable so that it appears to another real channel.

Figure 3 shows a simple exemplary screen display 100 presented to the television user when the virtual channel is selected. The display comprises a background region 102, which may be plain or which may include logos and/or advertising material, and a picture-in-picture region 104 in which a currently selected video stream 105 is displayed. A programme information region 106 is provided with a header bar 108 identifying the currently selected virtual channel and a programme guide region 110 displaying a list of programmes and times. Predefined or soft menu buttons 112 are also provided for control of, *inter alia,* scheduling and electronic programme guide functions.

Screen display 100 may be downloaded as a Web page or may comprise locally generated graphics or may be a combination of these; if display 100 is a Web page, screen regions such as menu buttons 112 may include hypertext links to other Web pages. In a preferred embodiment, selecting region 108, for example by clicking on the region with a pointer, displays a list of channels including real and virtual channels; selecting region 110 changes the display of programme information, displaying programmes at other times and/or further information on a selected programme; and selecting region 105 expands the video to fill the screen.

The system includes input means to receive information, as described above, defining the virtual channel schedule. In a simple system, the input means comprises a communications device such as phone modem 46 or cable receiver 56 together with a software driver operating together to allow a schedule to be downloaded from a remote location such as a critic's choice Web page thus a user could, for example, download a newspaper's recommended choice of viewing for the evening. Smart card interface module 36 can similarly be used to load virtual channel schedules from a user's or a published Smart card (i.e. a card incorporating a silicon chip data storage module).

Preferably the operating software includes software to allow a user to define a virtual channel schedule. For this mode of operation the system includes an interface means (hardware and/or software) to communicate with the programme database, as outlined above. To allow user scheduling of programmes the database must include programme time and channel information needed to construct the virtual channel schedule as well as information identifying the programmes to be scheduled, for example programme titles.

The database may be held locally or remotely from the apparatus, for example at a regional head-end delivery point. In cable systems with a permanent connection normal remote access protocols can be used to download the data via some out-of-band data path, for example using a cable modem. Alternatively, both a local and a remote database can be used, with the local database as a mirror of the remote master database.

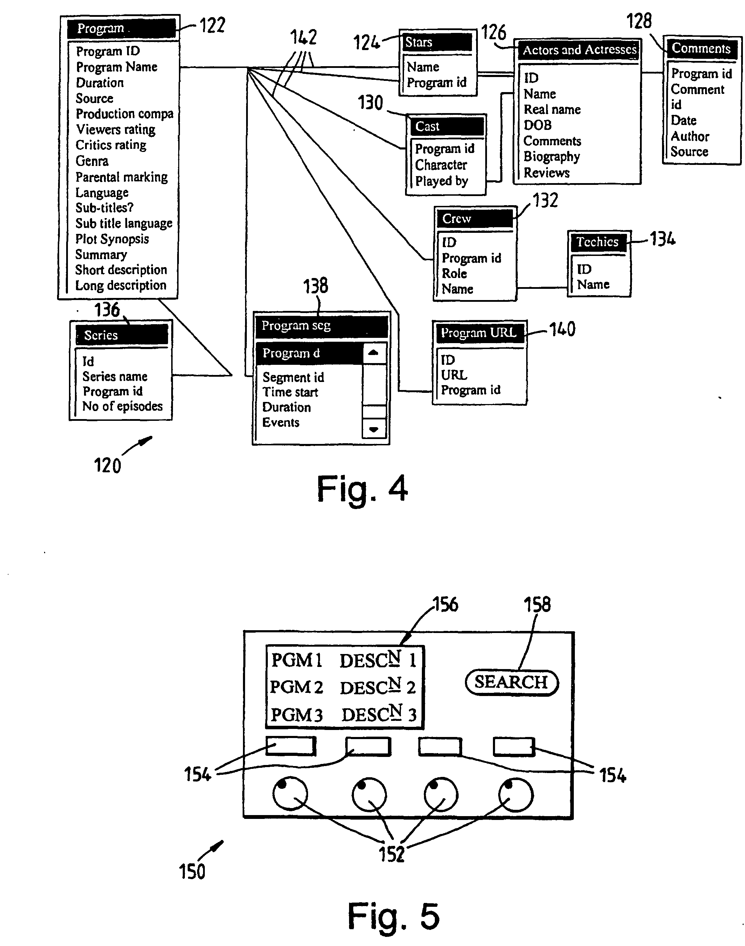

To allow the user to make an informed choice of programmes for scheduling the database preferably also comprises programme descriptor information characterising the content of the programmes in the database so that the user can search the database for programmes of a desired type or having specific features. Figure 4 shows an example schema 120 for a relational programme database. Associated with each programme in a "programme" table 122 are programme I.D., programme name, duration, source, production company, viewer's rating, critic's rating, genre, parental marking (age suitability/certification; violence or bad language; religion; nudity) language, indication of the presence of sub-titles, sub-title language, plot synopsis, summary, short description, long description, and other fields such as producer and director can also be included. Other illustrative linked tables include "stars" 124, "actors and actresses" 126, "comments" 128, "cast" 130, "crew" 132, "techies 134", "series 136", "programme segment" 138, "programme, and URLs" 140 (identifying, for example, an NVOD programme source). The links 142 between the tables in the relational database indicate which tables share data.

The data can be manually entered into the database or derived from a standard electronic programme guide feed or retrieved from broadcasters' or other Web pages using Web-spider search techniques or can be derived from a combination of these sources. If a Web-spider search engine is used, it is desirable that the EPG data to be collected by the Web-spider is published in a standard format so that the information corresponding to the various fields in the database can easily be located.

In an exemplary embodiment the Web-spider (which is essentially a software module) begins at a starting Web page, which may be predefined or manually entered. This page is searched for programme information for the database and for hypertext links to other Web pages, preferably using key words to identify the potentially most useful links. The search engine then either follows a single link to a new Web page where again electronic programme guide data and further hypertext links are gathered, or the software creates two or more separate tasks to follow a plurality of hypertext links simultaneously. In this way EPG data is gathered as the search engine works its way through a tree of hypertext links. When a dead end is reached the search engine works back up the tree until an unused link is found.

Although a notional tree of links is constructed, in reality there is no tree-like hierarchy amongst the Web pages searched and. theoretically, such a strategy allows virtually the entire Web to be searched. If desired, searching can be made more efficient by including a list of URLs or links to pages where it is known that EPG data is located, or to pages which are known to include links to useful EPG pages, and the search engine can be configured to search these first or to search to a limited depth from these predefined pages. Again, the predefined pages can, for example, be manually entered or downloaded from a manually updated source.

An exemplary embodiment of the system includes a user interface for definition of a virtual channel scheduled by the user and/or for tailoring or alteration of a predefined or downloaded virtual channel schedule. Figure 5 shows a simple exemplary screen display 150 for such a user interface, which allows the user to search the programme database according to user defined criteria and to display programmes matching the criteria, either for immediate showing, or for recording for later viewing, or for scheduling on a virtual channel. User interface 150 for capturing the users input and displaying the results, can be a Web-browser extended for TV use, for example in accordance with the recommendations of the Advanced Television Enhancement Forum (ATVEF).

In the example, knobs 152 are used to dial up criteria which appear in display windows 154. Thus a first window may be used to select a genre such as a movie, the second window an associated theme such as "western", a third window, "stars" and a fourth window "John Wayne". A more advanced user interface can also include means to enter key words for word, name, subject, and /or title word searches to allow user for example, to make a request such as "I want to watch gardening programme about heritage tomatoes".

Example search criteria include programme name, star, genre (i.e. programme type such as movie, documentary, news bulletin), theme (e.g. western, comedy, gardening), key words and description, critic's/viewers' ratings, source or broadcast channel (e.g. BBC1), parental guidelines (e.g. ''No nudity", or "before 9 p.m."), language.

The system operating software searches the database using standard database query techniques according to the user defined criteria. After the criteria has been dialled-up or entered, a list of programmes and related information (title, time, duration, description etc) appears in window 156 and button 158 can be used for additional searching/programme display. The user may then tailor or alter their virtual channel schedule.

The system can also include means to identify a current user of the set top box. In one embodiment this is provided by a login screen where a user name and password must be entered before other elements of the operating system can be accessed. Since the system is aware of the user's identity, the viewing and/or scheduling of programmes can be restricted in accordance with the current user. For example, channel descriptor bar 108 in Figure 3 can be selectable to list channels available to a current user. In an alternative embodiment, only one or a few users need enter a password and all the non-password protected users are subject to viewing/scheduling restrictions. This arrangement allows parental control guidelines to be set by a nominated user, such as the account holder, or other users of the set top box.

Parental control may include or exclude programmes with markings that indicate certain categories, such as nudity, violence, religion, bad language, gambling, alcohol or substance abuse, and all set time constraints, for example, "before 9 p.m.", or "not more than one hour per day or five hours per week". This is achieved by storing data linking a user identity (either a specific named user or a class such as "non-password user") with programme channel and/or descriptor information. If a number of virtual channels are shared between a number of users, separate user defined sets of virtual channels may also be specified.

The system may also include input means to receive other user information, in addition to user identity information; this may be stored locally or remotely. In particular, the system is capable of receiving preference information characterising a user's preferred programmes. This can be based on information directly entered by a user or on information characterising the user's history of usage of the system, for example, generalisations using AI (Artificial Intelligence) techniques, based upon locally stored viewing statistics. User entered preference information may describe explicit user preferences (for example, "I like westerns") or may be based upon more general information characterising the user, such as their socio-economic class. Preference information can also be derived from "voting", in which the user specifies programmes which have been enjoyed and/or disliked.

The system software preferably allows a user the option of making a virtual channel schedule available for transmission to a remote destination. This allows targeted marketing by a service provider and the exchange of virtual channel schedules, either explicitly defined or as preference data sets, to be exchanged between users in different locations, for example between friends and neighbours. Preferably schedule information can be downloaded to a Smart card which the user can then carry around, for example to allow the viewing of preferred virtual channels on a hotel television. The Smart card need only carry the user's identity if the user's information is remotely accessible either from a home set top box or from a central database.

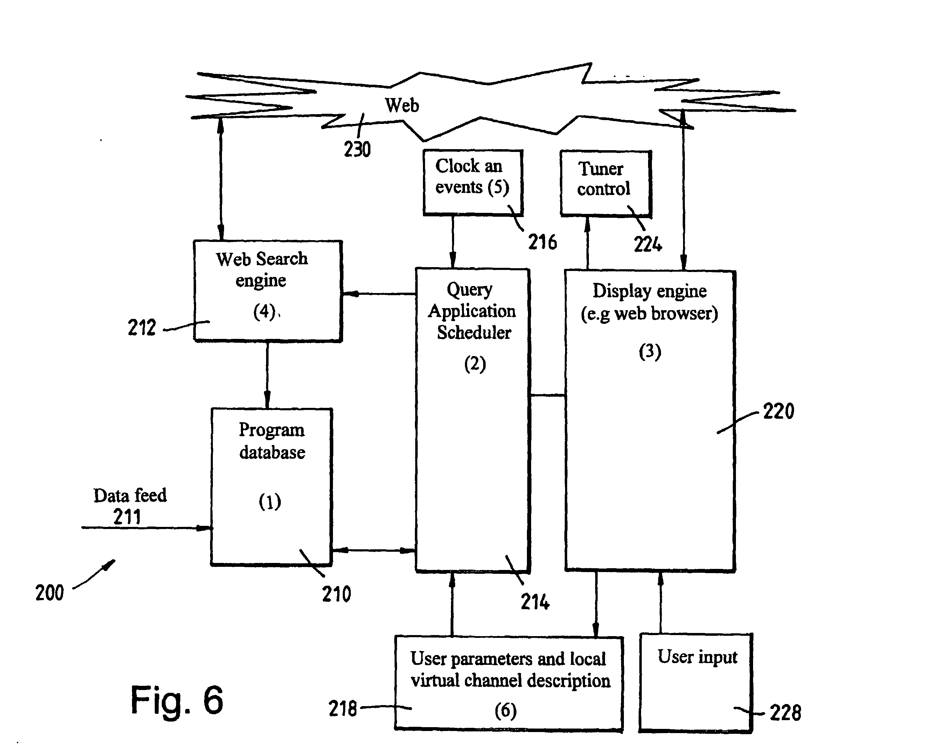

A block diagram 200 illustrating modules of the operating software of the system is shown in Figure 6. Programme database 210 receives data from Web-search engine 214 coupled to World Wide Web (Internet) 230, and also data from data feed 211. Virtual channel scheduling is carried out by scheduler 214, which interacts with programme database 210, and controls Web-search engine 212. This receives inputs from real- time clock and events handling software drivers 216 and user preference information/parameters and virtual channe! description data from module 218.

The scheduler 214 also interacts with display engine 220, which controls the display of images on the television, and which preferably incorporates a Web-browser. The display engine interacts with tuner control module 224 to control the programme receiving means to provide programmes to the set top box output. It also receives user input from module 228 for scheduling programmes on a virtual channel and for direct control of programmes provided to the television. Optionally a payment management module is also included to manage subscription payments to allow programme choices to be made from subscription channels, and to periodically download billing data for pay-per-view programmes.

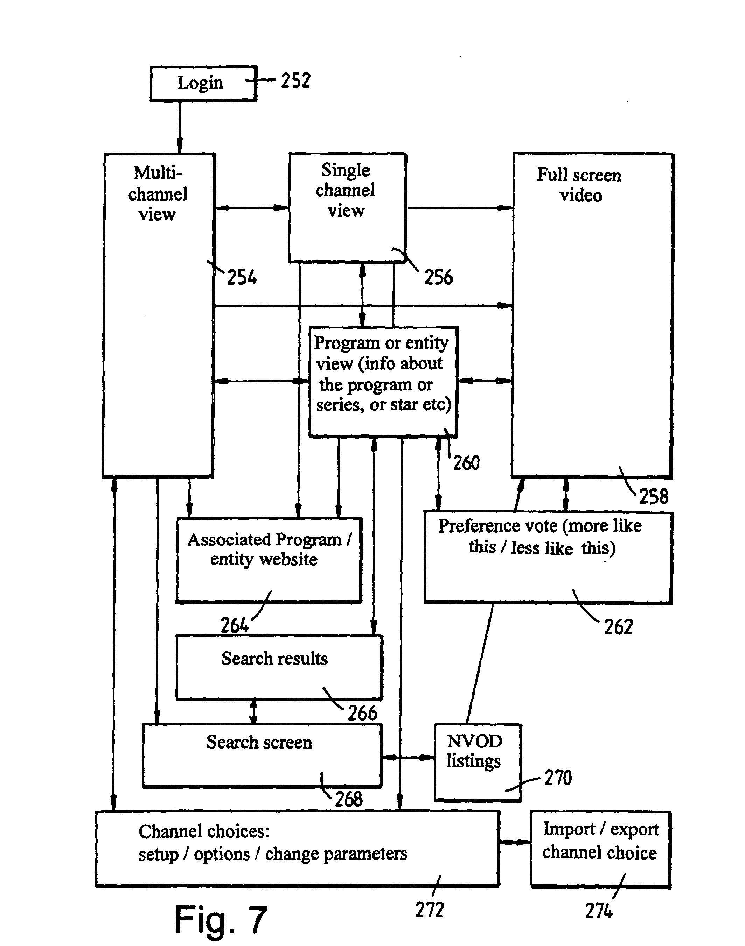

Figure 7 schematically shows elements of a simple exemplary user interface to the system and links between these elements which allow a user to navigate through the displayed menus and screens. The user enters at login screen 252 which, as described above, restricts access to the system. Once the user has successfully logged-on a multi-channel programme display 254 is presented in which the screen is divided into a number of small regions each of which displays a different programme. From this the user may navigate to a single channel view 256 similar to that of Figure 3, in which the user is presented with a single programme in a window on Web page, together with an electronic programme guide providing programme and time information. Selecting the video picture results in full screen video display 258.

From any one of screen displays 254. 256 and 258, additional information about a programme may be displayed - for example, a brief description and critic's comments - in screen view 260. From this screen and from the full screen video display the user can enter preference information and/or vote on screen 262 to indicate that more (or less) programmes of the type displayed are desired.

Associated programmes and/or Web sites providing further information relating to a programme may be accessed from screen 264 via the single 256 and multi-channel 254 view screens and programme information screen 260. Search screen 268 and search results screen 266 may be accessed as illustrated by the links shown, and also from NVOD listings screen 270. Further channel choices, including current user restrictions, user defined virtual channel sets, system set-up options and user parameters may be accessed from screen 272; virtual channel schedules may also be defined from this screen, and user and channel data may be imported and exported via screen 274.

In another embodiment, a set top box is equipped with software controlled tuning to generate custom programming tailored to a user's own preferences. The software may be written in a combination of JavaScript and Perl with server-side Perl scripts representing native applications, allowing JavaScript to access data files on the server through Perl with Perl retaining the data in the form of a JavaScript library file. Alternatively, in a preferred arrangement, rather than spanning a local PC and a server the software is entirely contained within the local STB with only periodic contact to a server to download schedule data. The STB has the capability of including a television window an HTML page for displaying broadcast and locally stored video. The system also has the capability to display a message over the television picture to remind or inform the user that a program in which they are or may be interested is about to start on another channel, to provide a reminder or notification feature. Preferably the STB has access to several hundred real channels.

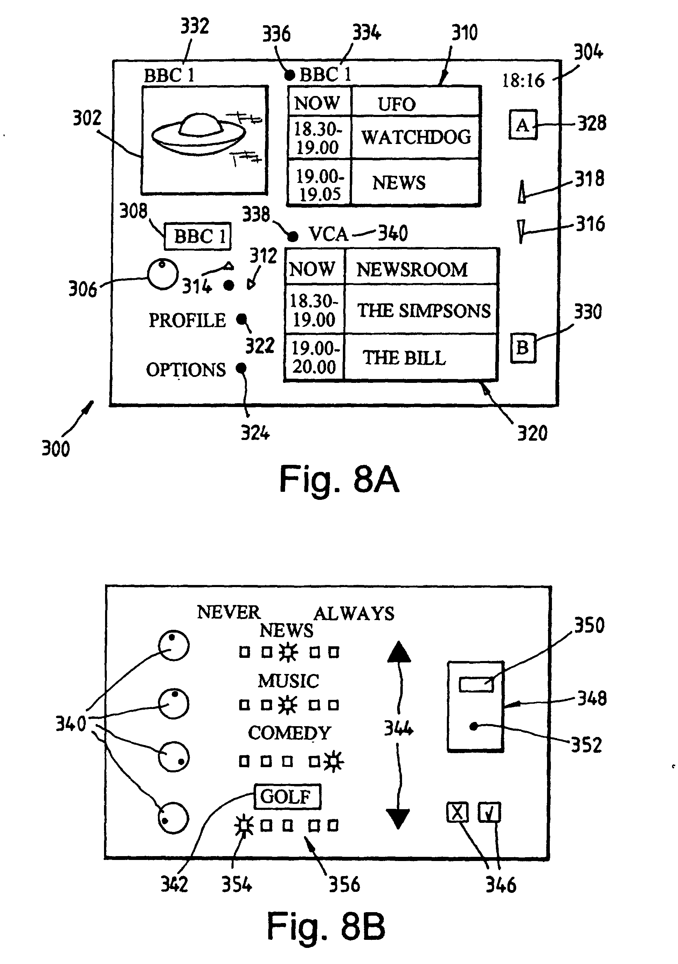

An initial log-on screen is provided to allow a user to identify themselves to the system using a usemame and password. After successful logging the user is presented with a main multi-channel view screen 300 as shown in Figure 8A. This shows a selection of the available channels with an extended now/next 310.320 listing for each. A TV window 302 shows the channel to which the STB is currently tuned and a clock 304 is provided to control time functions such as stating the now/next displays 310,320. The name of the currently displayed television channel is displayed in TV header window 332 and the names of the displayed schedules are displayed in banners 334 and 340. Channel selection control 306 is used to choose a channel, named in window 308, either for display in the TV window, using butter 314 or for display in the schedule listings, using button 312. Additional buttons 322.324 take the user to profile and options screens. Buttons 336 and 338 display an extended schedule listing and/or a full screen TV view. Page-up and -down controls 318.316 move through the displayed channel schedules a block at a time.

Buttons 328 and 330 are labelled with a channel name and when operated by a user load a virtual channel into the EPG. This allows the user to view, for example, a personalised channel designed by another person such as a TV critic to provide a "critics choice" type virtual channel. Once downloaded, a virtual channel is added to the channel list and displayed in schedules windows 310,320 when selected.

Figure 8B shows a user profile screen for defining a user profile which controls the global behaviour of the EPG across all its channels. It is used mainly for enforcing parental control although it may also be used to control the display of any type of material across the whole EPG. The interface includes rotary controls 340 which are used to indicate a preference for a genre or programmes including or described by a particular keyword, as shown in window 342. Controls 344 select user preference setting or options and controls 346 accept or reject changes.

In a preferred embodiment a user profile can only be altered when a parental control lock 348 is unlocked. This requires entering a password in window 350 and operating button 352. The effect of the preference settings depends whether or the settings are positive or negative. Positive settings allow, for example, an indication of the relevance of programmes to the user's profile, in one embodiment using shading by relevance. This causes programmes in scheduling to be shaded from light for highly relevant to dark for irrelevant. Negative settings can also be used for shading by relevance but are preferably also applied to broadcast and virtual channels by blocking access to channels when a programme contains data that is classified as "never", as indicated by illuminated segment 354 on bar 356. Preferably the controls 340 operate with genres by weighting each of a set of predefined (or downloadable) keywords associated with a given genre - for example with "music" including keywords for composers and/or pop groups' names.

Although the device has been described with reference to its use for scheduling television programmes, the system is also suitable for scheduling any type of programme entity, including digital music/audio programmes and computer games. More generally it is suitable for addressing the problems of scheduling any set of programme-type entities given a relatively large number of candidate entities for scheduling.

Many other effective alternatives will occur to those skilled in the art and it is to be understood that the invention is not limited to the described embodiments.

## Claims

1. A system (10) for providing an entertainment device (74) with a virtual channel,
the virtual channel comprising a schedule of programmes and corresponding start times, the programmes being selected from programmes available from a plurality of real channels and/or other programme sources, the system comprising:
schedule input means (46) to receive virtual channel schedule information;
schedule information storage means (32);
schedule display means (70, 72) for displaying a stored schedule;
the control means (12) to control a programme reception device (52, 56, 57, 60) using the virtual channel schedule information to select and receive, at a scheduled start time, a correspondingly scheduled programme from a real channel or programme source; and
output means (72) to provide scheduled programmes thus received to the entertainment device;
**characterised in that** the virtual channel schedule information comprises, for each scheduled programme, programme start time information and information identifying a said real channel or programme source from which the programme is available at that start time;
the schedule input means includes communication means to download the virtual channel schedule information to the system from a source remote from the system to the storage means, and **in that**;
the virtual channel is selectable by a user of the entertainment device in a similar way to a real programme channel.

2. A system as claimed in claim 1 further comprising mapping means to map schedule information from a first virtual channel to a second virtual channel and wherein the virtual channel schedule information is adapted to identify for the second virtual channel a programme source from the first virtual channel.

3. A system as claimed in claim 1 or 2 further comprising:
database interface means (46) to communicate with a programme database (76) comprising programme information for a plurality of programmes, including for each programme the programme start time, a real channel or programme source the programme is available from at that start time, and programme identification information; and
a user interface (38, 40) coupled to the data base interface means to receive the programme information, and to the schedule input means, and wherein the user interface displays at least some of the programme information, for definition and/or tailoring of the virtual channel schedule by the user.

4. A system as claimed in claim 3 wherein the programme database further includes for each programme, programme descriptor information **characterizing the** content of the programme, in particular
wherein the user interface includes means to identify a current user, and storage means to store data linking a user identity with channel and/or programme descriptor information, and wherein the user interface includes means to restrict scheduling of programmes with descriptor information corresponding to descriptor information linked to the current user.

5. A system as claimed in claim 3 or 4 wherein the user interface is operable to select a programme in a channel schedule to add the programme to a virtual channel schedule.

6. A system as claimed in any one of claims 3 to 5 wherein the user interface is configured to provide a plurality of virtual channels for a plurality of users wherein associated with a user is a set of one or more virtual channels; the user interface further comprising means to select a current user from the plurality of users and means to change between virtual channels in the selected current user's set and to restrict the current user's access to others of the plurality of virtual channels, in particular
wherein the set of virtual channels is user-definable.

7. System as claimed in any one of claims 3 to 6 wherein the user interface is operable to define a portion of the virtual channel schedule to be the same as a corresponding portion of a schedule of a broadcast television channel comprising a plurality of broadcast programmes.

8. System as claimed in any one of claims 3 to 7 wherein the user interface is operable to define a search term and wherein the display means displays programmes in a schedule together with an indication of their degree of relevance to the search term, in particular
wherein the user interface is operable to automatically define the search term dependent upon user selection of a scheduled programme, whereby the displayed schedule indicates other programmes similar to the selected programme.

9. System as claimed in any one of claims 3 to 8 wherein the user interface is operable to define a user profile and wherein the display means displays programmes in an electronic programme guide together with an indication of their degree of relevance to the user profile.

10. System as claimed in any one of claims 1 to 9 further comprising fill-in means coupled to the schedule information storage means, to the programme reception device and to the output means to identify gaps in the virtual channel schedule and to fill-in the gaps according to a user-input preference for fill-in options including at least one of no-fill-in, near-video-on-demand fill-in, previously recorded fill-in, and favourite channel fill-in.

11. System as claimed in any preceding claim wherein the programme reception device includes means (46, 56) to receive video on demand (VOD) and/or near-video-on-demand (NVOD) programmes whereby the real channels include channels available from a VOD and/or an NVOD programme source.

12. System as claimed in any preceding claim wherein the programme reception device includes means (46, 56) to receive programmes over the Internet whereby the programme sources include Internet programme sources.

13. System as claimed in any preceding claim including a programme reception device.

14. System as claimed in any preceding claim further comprising programme storage means (28), coupled to the processing means, to receive broadcast programmes and store them for later playing, whereby the stored programmes are available for the virtual channel's schedule of programmes, in particular
wherein the programme storage means is operable to concurrently store a received programme and to play a stored programme.

15. System as claimed in any one of claims 3 to 14 further comprising schedule output means to transmit a virtual channel schedule to a destination remote from the system.

16. System as claimed in claim 15 wherein at least one of the schedule input and schedule output means includes a software interface and a physical interface (36) to a portable data storage device (37) configured for releasable interengagement with the physical interface by a user during normal operation of the system.

17. System as claimed in claim 16 wherein the data storage device comprises a smart card.

18. System as claimed in any one of claims 3 to 17 wherein the programme database is remote from the system and the interface means comprises a modem.

19. A system as claimed in claim 1 further comprising means for a user to identify themselves to the system and wherein the identified user's virtual channel schedule information is downloaded to the storage means, and in particular
further comprising means (36, 37; 46; 274) to communicate with a remote user of another similar system for transmission or reception of at least a portion of a said virtual channel schedule and/or virtual channel describing parameters.

20. System as claimed in any preceding claim wherein the entertainment device is a television (74).

21. A set top box comprising the system of claim 19.

22. A method of providing an entertainment device (74) with a virtual channel,
the virtual channel comprising a schedule of programmes and corresponding start times, the programmes being selected from programmes available from a plurality of real channels and/or other programme sources,
the method comprising:
downloading virtual channel schedule information comprising, for each scheduled programme, programme start time information and information identifying a real channel and/or other programme source from which the programme is available at that start time;
displaying a portion of a virtual channel schedule;
controlling a programme reception device (52, 56, 57, 60) using the virtual channel schedule information to select and receive, at the scheduled start time, the real channel or programme source corresponding to the scheduled programme and;
providing scheduled programmes thus received to the entertainment device such that the virtual channel is selectable by a user of the entertainment device in a similar way as a real programme channel.

23. A method as claimed in claim 22 further comprising outputting virtual channel schedule information.

24. A method as claimed in claim 23 wherein said outputting comprises outputting to a portable data storage device.

25. A method as claimed in any one of claims 22 to 24 further comprising identifying the user of the system and wherein said downloading downloads the identified user's virtual channel schedule information, in particular
further comprising communicating with a user of another entertainment device for transmission or reception of at least a portion of a said virtual channel schedule and/or virtual channel describing parameters.

26. A method as claimed in any one of claims 22 to 25 wherein the entertainment device is a television.

27. A method as claimed in any one of claims 22 to 25 for use with the system of any one of claims 1 to 20, wherein said downloading comprises downloading the virtual channel schedule information to the system from a source remote from the system and storing the virtual channel schedule information in the system schedule information storage means.

28. A computer program to, when running, perform the method of any one of claims 22 to 27.

29. A computer readable medium storing the computer program of claim 28.

## Patentansprüche

1. System (10) zum Versorgen einer Unterhaltungsvorrichtung (74) mit einem virtuellen Kanal, wobei der virtuelle Kanal einen Ablaufplan für Programme und entsprechende Startzeiten umfaßt, wobei die Programme aus Programmen gewählt werden, die aus einer Vielzahl von echten Kanälen und/oder anderen Programmquellen verfügbar sind, wobei das System umfaßt:
eine Ablaufplaneingabeeinrichtung (46), um virtuelle Kanalablaufplaninformation zu empfangen;
eine Ablaufplaninformationsspeichereinrichtung (32);
eine Ablaufplananzeigeeinrichtung (70, 72) zum Anzeigen eines gespeicherten Ablaufplans;
wobei die Steuereinrichtung (12), um eine Programmempfangsvorrichtung (52, 56, 57, 60) zu steuern, die virtuelle Kanalablaufplaninformation verwendet, um zu einer geplanten Startzeit ein entsprechend geplantes Programm aus einem echten Kanal oder einer echten Programmquelle zu wählen und zu empfangen; und
eine Ausgabeeinrichtung (72), um derartig empfangene Programme an die Unterhaltungsvorrichtung zu liefern;
**dadurch gekennzeichnet, daß** die virtuelle Kanalablaufplaninformation für jedes geplante Programm eine Programmstartzeitinformation und eine Information umfaßt, die den echten Kanal oder die echte Programmquelle identifiziert, von der das Programm zu dieser Startzeit verfügbar ist;
die Ablaufplaneingabeeinrichtung eine Kommunikationseinrichtung aufweist, die die virtuelle Kanalablaufplaninformation auf das System von einer Quelle, die von dem System entfernt ist, herunterlädt auf die Speichereinrichtung und daß
der virtuelle Kanal von einem Anwender der Unterhaltungsvorrichtung auf eine ähnliche Weise wie ein echter Programmkanal wählbar ist.

2. System nach Anspruch 1, ferner mit einer Umsetzungseinrichtung, um Ablaufplaninformation von einem ersten virtuellen Kanal auf einen zweiten virtuellen Kanal umzusetzen, und wobei die virtuelle Kanalablaufplaninformation geeignet ist, für den zweiten virtuellen Kanal eine Programmquelle vom ersten virtuellen Kanal zu identifizieren.

3. System nach Anspruch 1 oder 2, ferner mit:
einer Datenbasisschnittstelleneinrichtung (46), um mit einer Programmdatenbasis (76) mit Programminformation für eine Vielzahl von Programmen zu kommunizieren, die für jedes Programm die Programmstartzeit, einen echten Kanal oder eine echte Programmquelle, von der das Programm zu dieser Startzeit verfügbar ist, und Programmidentifikationsinformation aufweist; und
einer Anwenderschnittstelle (38, 40), die gekoppelt ist mit einer Datenbasisschnittstelleneinrichtung, um die Programminformation zu empfangen, und mit der Ablaufplaneingabeeinrichtung, und wobei die Anwenderschnittstelle mindestens einen Teil der Programminformation anzeigt, zur Definition und/oder zum Anpassen des virtuellen Kanalablaufplans durch den Anwender.

4. System nach Anspruch 3, wobei die Programmdatenbasis ferner für jedes Programm eine Programmdeskriptorinformation aufweist, die den Inhalt des Programms **kennzeichnet**, insbesondere
wobei die Anwenderschnittstelle aufweist: eine Einrichtung, um einen aktueller Anwender zu identifizieren, und eine Speichereinrichtung, um Daten zu speichern, die eine Anwenderidentität mit Kanal- und/oder Programmdeskriptorinformation verknüpfen, und wobei die Anwenderschnittstelle eine Einrichtung aufweist, um die Ablaufplanung der Programme mit Deskriptorinformation einzuschränken, die der Deskriptorinformation entspricht, die mit dem aktuellen Anwender verknüpft ist.

5. System nach Anspruch 3 oder 4, wobei die Anwenderschnittstelle betriebsfähig ist, um ein Programm in einem Kanalablaufplan zu wählen, um das Programm einem virtuellen Kanalablaufplan hinzuzufügen.

6. System nach einem der Ansprüche 3 bis 5, wobei die Anwenderschnittstelle so konfiguriert ist, daß eine Vielzahl von virtuellen Kanälen für eine Vielzahl von Anwendern bereitgestellt wird, wobei einem Anwender eine Gruppe aus einem oder mehreren virtuellen Kanälen zugeordnet ist; die Anwenderschnittstelle ferner umfaßt: eine Einrichtung, um einen aktuellen Anwender aus der Vielzahl von Anwendern zu wählen, und eine Einrichtung, um zwischen den virtuellen Kanälen in der gewählten Gruppe des aktuellen Anwenders zu wechseln und den Zugriff des aktuellen Anwenders auf andere aus der Vielzahl von virtuellen Kanälen zu beschränken, insbesondere
wobei die Gruppe der virtuellen Kanäle anwenderdefinierbar ist.

7. System nach einem der Ansprüche 3 bis 6, wobei die Anwenderschnittstelle betriebsfähig ist, um einen Abschnitt des virtuellen Kanalablaufplans so zu definieren, daß er mit einem entsprechenden Abschnitt eines Ablaufplans eines Fernsehsendekanals mit einer Vielzahl von Sendeprogrammen identisch ist.

8. System nach einem der Ansprüche 3 bis 7, wobei die Anwenderschnittstelle betriebsfähig ist, um einen Suchbegriff zu definieren, und wobei die Anzeigeeinrichtung Programme in einem Ablaufplan zusammen mit einer Angabe ihres Relevanzgrades für den Suchbegriff anzeigt, insbesondere
wobei die Anwenderschnittstelle betriebsfähig ist, um den Suchbegriff in Abhängigkeit von der Wahl eines geplanten Programms durch den Anwender automatisch zu definieren, wobei der angezeigte Plan andere Programme angibt, die dem gewählten Programm ähnlich sind.

9. System nach einem der Ansprüche 3 bis 8, wobei die Anwenderschnittstelle betriebsfähig ist, ein Anwenderprofil zu definieren, und wobei die Anzeigeeinrichtung Programme zusammen mit einer Angabe ihres Relevanzgrades für das Anwenderprofil in einem elektronischen Programmführer anzeigt.

10. System nach einem der Ansprüche 1 bis 9, ferner mit einer Ausfülleinrichtung, die mit der Ablaufplaninformationsspeichereinrichtung, mit der Programmempfangsvorrichtung und der Ausgabeeinrichtung gekoppelt ist, um Lücken im virtuellen Kanalablaufplan zu identifizieren und die Lücken entsprechend einer Anwendereingabevorliebe für Ausfüllmöglichkeiten auszufüllen, einschließlich mindestens einer, nämlich keine Ausfüllmöglichkeit, Videoverteildienst-Ausfüllmöglichkeit, vorher aufgezeichnete Ausfüllmöglichkeit und/oder Lieblingskanal-Ausfüllmöglichkeit.

11. System nach einem der vorhergehenden Ansprüche, wobei die Programmempfangsvorrichtung aufweist: eine Einrichtung (46, 56), um Video-auf-Abruf-(VOD-) und/oder Video-Verteildienst-(NVOD-)Programme zu empfangen, wodurch die echten Kanäle Kanäle aufweisen, die von einer VOD- und/oder einer NVOD-Programmquelle verfügbar sind.

12. System nach einem der vorhergehenden Ansprüche, wobei die Programmempfangsvorrichtung eine Einrichtung (46, 56) aufweist, um Programme über das Internet zu empfangen, wodurch die Programmquellen Internetprogrammquellen sind.

13. System nach einem der vorhergehenden Ansprüche, mit einer Programmempfangsvorrichtung.

14. System nach einem der vorhergehenden Ansprüche, ferner mit einer Programmspeichereinrichtung (28), die mit der Verarbeitungseinrichtung gekoppelt ist, um Sendeprogramme zu empfangen und sie für ein späteres Abspielen zu speichern, wodurch die gespeicherten Programme für den Ablaufplan von Programmen des virtuellen Kanals verfügbar sind, insbesondere
wobei die Programmspeichereinrichtung betriebsfähig ist, um ein empfangenes Programm zu speichern und gleichzeitig ein gespeichertes Programm abzuspielen.

15. System nach einem der Ansprüche 3 bis 14, ferner mit einer Ablaufplanausgabeeinrichtung, um einen virtuellen Kanalablaufplan an ein Ziel zu übertragen, das vom System entfernt ist.

16. System nach Anspruch 15, wobei mindestens eine, nämlich die Ablaufplaneingabe- und/oder die Ablaufplanausgabeeinrichtung eine Softwareschnittstelle und eine physische Schnittstelle (36) zu einer tragbaren Datenspeichervorrichtung (37) aufweist, die für einen lösbaren gegenseitigen Eingriff mit der physischen Schnittstelle durch einen Anwender während des normalen Betriebs des Systems konfiguriert ist.

17. System nach Anspruch 16, wobei die Datenspeichervorrichtung eine Smart-Card aufweist.

18. System nach einem der Ansprüche 3 bis 17, wobei die Programmdatenbasis vom System entfernt ist und die Schnittstelleneinrichtung ein Modem umfaßt.

19. System nach Anspruch 1, ferner mit einer Einrichtung, mittels der sich ein Anwender gegenüber dem System identifiziert, und wobei die virtuelle Kanalablaufplaninformation des identifizierten Anwenders auf die Speichereinrichtung heruntergeladen wird und insbesondere
ferner mit Einrichtungen (36, 37; 46; 274), um mit einem entfernten Anwender eines weiteren ähnlichen Systems zur Übertragung oder zum Empfang mindestens eines Abschnitts eines virtuellen Kanalablaufplans und/oder von virtuellen Kanalbeschreibungsparametern zu kommunizieren.

20. System nach einem der vorhergehenden Ansprüche, wobei die Unterhaltungsvorrichtung ein Fernsehapparat (74) ist.

21. Beistellgerät mit dem System nach Anspruch 19.

22. Verfahren zum Versorgen einer Unterhaltungsvorrichtung (74) mit einem virtuellen Kanal,
wobei der virtuelle Kanal einen Ablaufplan für Programme und entsprechende Startzeiten umfaßt, wobei die Programme aus Programmen gewählt werden, die aus einer Vielzahl von echten Kanälen und/oder anderen Programmquellen verfügbar sind,
das Verfahren umfaßt:
Herunterladen von virtueller Kanalablaufplaninformation, die für jedes geplante Programm eine Programmstartzeitinformation und eine Information umfaßt, die einen echten Kanal und/oder eine andere Programmquelle identifiziert, von der das Programm zu dieser Startzeit verfügbar ist;
Anzeigen eines Abschnitts eines virtuellen Kanalablaufplans;
Steuern einer Programmempfangsvorrichtung (52, 56, 67, 60) unter Verwendung der virtuellen Kanalablaufplaninformation, um zu der geplanten Startzeit den echten Kanal oder die Programmquelle, die dem geplanten Programm entspricht, zu wählen und zu empfangen; und
Liefern derartig empfangener geplanter Programme an die Unterhaltungsvorrichtung, so daß der virtuelle Kanal von einem Anwender der Unterhaltungsvorrichtung auf eine ähnliche Weise wählbar ist wie ein echter Programmkanal.

23. Verfahren nach Anspruch 22, ferner mit dem Schritt: Ausgeben von virtueller Kanalablaufplaninformation.

24. Verfahren nach Anspruch 23, wobei das Ausgeben den Schritt umfaßt: Ausgeben an eine tragbare Datenspeichervorrichtung.

25. Verfahren nach einem der Ansprüche 22 bis 24, ferner mit dem Schritt: Identifizieren des Anwenders des Systems, und wobei durch das Herunterladen die virtuelle Kanalablaufplaninformation des identifizierten Anwenders heruntergeladen wird, insbesondere
ferner mit dem Schritt: Kommunizieren mit einem Anwender einer anderen Unterhaltungsvorrichtung zur Übertragung oder zum Empfang mindestens eines Abschnitts des virtuellen Kanalablaufplans und/oder der virtuellen Kanalbeschreibungsparameter.

26. Verfahren nach einem der Ansprüche 22 bis 25, wobei die Unterhaltungsvorrichtung ein Fernsehapparat ist.

27. Verfahren nach einem der Ansprüche 22 bis 25 zur Verwendung mit dem System nach einem der Ansprüche 1 bis 20, wobei das Herunterladen den Schritt umfaßt: Herunterladen der virtuellen Kanalablaufplaninformation auf das System von einer Quelle, die vom System entfernt ist, und Speichern der virtuellen Kanalablaufplaninformation in der Systemablaufplaninformationsspeichereinrichtung.

28. Computerprogramm, um beim Ablaufen das Verfahren nach einem der Ansprüche 22 bis 27 durchzuführen.

29. Computerlesbares Medium, das das Computerprogramm nach Anspruch 28 speichert.

## Revendications

1. Système (10) pour munir un dispositif de loisir (74) d'un canal virtuel, le canal virtuel comprenant une planification de programmes et de temps de début correspondants, les programmes étant sélectionnés parmi des programmes disponibles à partir d'une pluralité de canaux réels et/ou d'autres sources de programme, le système comprenant:
un moyen d'entrée de planification (46) pour recevoir une information de planification de canal virtuel;
un moyen de stockage d'information de planification (32);
un moyen d'affichage de planification (70, 72) pour afficher une planification stockée;
un moyen de commande (12) pour commander un dispositif de réception de programme (52, 56, 57, 60) en utilisant l'information de planification de canal virtuel afin de sélectionner et de recevoir, à un temps de début planifié, un programme planifié en correspondance en provenance d'un canal réel d'une source de programme; et
un moyen de sortie (72) pour appliquer des programmes planifiés ainsi reçus sur le dispositif de loisir,
**caractérisé en ce que** l'information de planification de canal virtuel comprend, pour chaque programme planifié, une information de temps de début de programme et une information qui identifie un dit canal réel ou une dite source de programme à partir duquel ou de laquelle le programme est disponible à ce temps de début; et
le moyen d'entrée de planification inclut un moyen de communication pour décharger l'information de planification de canal virtuel sur le système depuis une source à distance du système jusqu'au moyen de stockage, et consistant **en ce que**:
le canal virtuel peut être sélectionné par l'utilisateur du dispositif de loisir d'une façon similaire à un canal de programme réel.

2. Système selon la revendication 1, comprenant en outre un moyen de cartographie pour cartographier l'information de planification depuis un premier canal virtuel jusqu'à un second canal virtuel et dans lequel l'information de planification de canal virtuel est adaptée pour identifier, pour le second canal virtuel, une source de programme à partir du premier canal virtuel.

3. Système selon la revendication 1 ou 2, comprenant en outre:
un moyen d'interface de base de données (46) pour communiquer avec une base de données de programmes (76) qui comprend une information de programme pour une pluralité de programmes, incluant, pour chaque programme, le temps de début de programme, un canal réel ou une source de programme pour lequel ou laquelle le programme est disponible depuis ce temps de début et une information d'identification de programme; et
une interface d'utilisateur (38, 40) qui est couplée au moyen d'interface de base de données pour recevoir l'information de programme et au moyen d'entrée de planification et dans lequel l'interface d'utilisateur affiche au moins une certaine part de l'information de programme pour une définition et/ou pour une personnalisation de la planification de canal virtuel par l'utilisateur.

4. Système selon la revendication 3, dans lequel la base de données de programmes inclut en outre, pour chaque programme, une information de descripteur de programme qui **caractérise** le contenu du programme, en particulier dans lequel l'interface d'utilisateur inclut un moyen pour identifier un utilisateur courant et un moyen de stockage pour stocker des données qui lient une identité d'utilisateur avec une information de descripteur de canal et/ou de programme et dans lequel l'interface d'utilisateur inclut un moyen pour limiter une planification des programmes avec une information de descripteur correspondant à une information de descripteur liée à l'utilisateur courant.

5. Système selon la revendication 3 ou 4, dans lequel l'interface d'utilisateur peut fonctionner pour sélectionner un programme au niveau d'une planification de canal afin d'additionner le programme à une planification de canal virtuel.

6. Système selon l'une quelconque des revendications 3 à 5, dans lequel l'interface d'utilisateur est configurée pour appliquer une pluralité de canaux virtuels pour une pluralité d'utilisateurs, dans lequel est associé à l'utilisateur un jeu d'un ou de plusieurs canaux virtuels; l'interface d'utilisateur comprenant en outre un moyen pour sélectionner un utilisateur courant à partir de la pluralité d'utilisateurs et un moyen pour effectuer un changement entre des canaux virtuels dans l'établissement d'utilisateur courant sélectionné et pour limiter l'accès par l'utilisateur courant à d'autres de la pluralité de canaux virtuels, en particulier dans lequel le jeu de canaux virtuels peut être défini par l'utilisateur.

7. Système selon l'une quelconque des revendications 3 à 6, dans lequel l'interface d'utilisateur peut fonctionner pour définir une partie de la planification de canal virtuel de telle sorte qu'elle soit la même qu'une partie correspondante d'une planification d'un canal de télévision de diffusion comprenant une pluralité de programmes de diffusion.

8. Système selon l'une quelconque des revendications 3 à 7, dans lequel l'interface d'utilisateur peut fonctionner pour définir un terme de recherche et dans lequel le moyen d'affichage affiche des programmes selon une planification en association avec une indication de leur degré de pertinence pour le terme de recherche, en particulier dans lequel l'interface d'utilisateur peut fonctionner pour définir de manière automatique le terme de recherche en fonction d'une sélection par l'utilisateur d'un programme planifié et ainsi, la planification affichée indique d'autres programmes similaires au programme sélectionné.

9. Système selon l'une quelconque des revendications 3 à 8, dans lequel l'interface d'utilisateur peut fonctionner pour définir un profil d'utilisateur et dans lequel le moyen d'affichage affiche des programmes dans un guide de programme électronique en association avec une indication de leur degré de pertinence pour le profil d'utilisateur.

10. Système selon l'une quelconque des revendications 1 à 9, comprenant en outre un moyen de remplissage couplé au moyen de stockage d'information de planification, au dispositif de réception de programme et au moyen de sortie pour identifier des espaces dans la planification de canal virtuel et pour remplir des espaces conformément à une préférence d'entrée d'utilisateur pour des options de remplissage incluant au moins un élément pris parmi un non remplissage, un remplissage par quasi-vidéo à la demande, un remplissage enregistré au préalable et un remplissage par canal favori.

11. Système selon l'une quelconque des revendications précédentes, dans lequel le dispositif de réception de programme inclut un moyen (46, 56) pour recevoir des programmes de vidéo à la demande (VOD) et/ou de quasi-vidéo à la demande (NVOD) et ainsi, les canaux réels incluent des canaux disponibles à partir d'une source de programme (VOD et/ou NVOD).

12. Système selon l'une quelconque des revendications précédentes, dans lequel le dispositif de réception de programme inclut un moyen (46, 56) pour recevoir des programmes sur l'Internet et ainsi, les sources de programme incluent des sources de programme de l'Internet.

13. Système selon l'une quelconque des revendications précédentes, incluant un dispositif de réception de programme.

14. Système selon l'une quelconque des revendications précédentes, comprenant en outre un moyen de stockage de programme (28), qui est couplé au moyen de traitement, pour recevoir des programmes de diffusion et pour les stocker pour une lecture ultérieure et ainsi, les programmes stockés sont disponibles pour la planification de canal virtuel de programmes, en particulier dans lequel le moyen de stockage de programme peut fonctionner de façon concurrente pour stocker un programme reçu et pour lire un programme stocké.

15. Système selon l'une quelconque des revendications 3 à 14, comprenant en outre un moyen de sortie de planification pour transmettre une planification de canal virtuel à une destination à distance du système.

16. Système selon la revendication 15, dans lequel au moins l'un des moyens d'entrée de planification et de sortie de planification inclut une interface de logiciel et une interface physique (36) sur un dispositif de stockage de données portable (37) configuré pour une inter-coopération libérable avec l'interface physique de la part d'un utilisateur pendant un fonctionnement normal du système.

17. Système la revendication 16, dans lequel le dispositif de stockage de données comprend une carte à puce.

18. Système selon l'une quelconque des revendications 3 à 17, dans lequel la base de données de programmes est à distance du système et le moyen d'interface comprend un modem.

19. Système la revendication 1, comprenant en outre un moyen pour qu'un utilisateur s'identifie lui-même sur le système et dans lequel l'information de planification de canal virtuel d'utilisateur comme identifié est déchargée sur le moyen de stockage, et en particulier comprenant en outre un moyen (36, 37; 46; 274) pour communiquer avec un utilisateur à distance d'un autre système similaire pour une émission et une réception d'au moins une partie d'une dite planification de canal virtuel et/ou de paramètres décrivant un canal virtuel.

20. Système selon l'une quelconque des revendications précédentes, dans lequel le dispositif de loisir est une télévision (74).

21. Décodeur comprenant le système de la revendication 19.

22. Procédé consistant à munir un dispositif de loisir (74) d'un canal virtuel, le canal virtuel comprenant une planification de programmes et de temps de début correspondants, les programmes étant sélectionnés parmi des programmes disponibles à partir d'une pluralité de canaux réels et/ou d'autres sources de programme, le procédé comprenant:
le déchargement d'une information de planification de canal virtuel comprenant, pour chaque programme planifié, une information de temps de début de programme et une information qui identifie un canal réel et/ou une autre source de programme depuis lequel ou laquelle le programme est disponible à ce temps de début;
l'affichage d'une partie d'une planification de canal virtuel;
la commande d'un dispositif de réception de programme (52, 56, 57, 60) en utilisant l'information de planification de canal virtuel afin de sélectionner et de recevoir, au temps de début planifié, le canal réel ou la source de programme correspondant au programme planifié; et
l'application de programmes planifiés ainsi reçus sur le dispositif de loisir de telle sorte que le canal virtuel puisse être sélectionné par un utilisateur du dispositif de loisir d'une façon similaire à un canal de programme réel.

23. Procédé selon la revendication 22, comprenant en outre l'émission en sortie d'une information de planification de canal virtuel.

24. Procédé selon la revendication 23, dans lequel ledit moyen de sortie comprend une émission en sortie sur un dispositif de stockage de données portable.

25. Procédé selon l'une quelconque des revendications 22 à 24, comprenant en outre l'identification de l'utilisateur du système et dans lequel ledit déchargement décharge l'information de planification de canal virtuel d'utilisateur comme identifié, en particulier comprenant en outre une communication avec un utilisateur d'un autre dispositif de loisir pour une émission et une réception d'au moins une partie de ladite planification de canal virtuel et/ou de paramètres décrivant un canal virtuel.

26. Procédé selon l'une quelconque des revendications 22 à 25, dans lequel le dispositif de loisir est une télévision.

27. Procédé selon l'une quelconque des revendications 22 à 25 pour une utilisation avec le système selon l'une quelconque des revendications 1 à 20, dans lequel ledit déchargement comprend le déchargement de l'information de planification de canal virtuel sur le système depuis une source à distance du système et le stockage de l'information de planification de canal virtuel dans le moyen de stockage d'information de planification de système.

28. Programme d'ordinateur pour, lorsqu'il est déroulé, réaliser le procédé selon l'une quelconque des revendications 22 à 27.

29. Support lisible par ordinateur qui stocke le programme d'ordinateur de la revendication 28.
